# EUROPEAN PATENT SPECIFICATION

(11) **EP 3 272 129 B1**
(45) Date of publication and mention of the grant of the patent: **19.08.2020**
(21) Application number: 16710231.8
(22) Date of filing: 17.03.2016
(51) Int. Cl.: H04Q 9/00, F17C 13/00, G06Q 10/08, H04B 5/00

(54) **A COMMUNICATION SYSTEM**
KOMMUNIKATIONSSYSTEM
SYSTÈME DE COMMUNICATION

(30) Priority: 17.03.2015 GB 201504450
(43) Date of publication of application: 24.01.2018
(73) Proprietor: Linde GmbH, 82049 Pullach (DE)
(72) Inventor: COWLES, Christopher John, London Greater London SW15 5AN (GB); HILTON, Derrick Ernest, Cobham Surrey KT11 1BE (GB); KANDZIORA, Christine, 82056 Baierbrunn (DE)
(74) Representative: Boult Wade Tennant LLP
(86) International application number: PCT/EP2016/055845
(87) International publication number: WO 2016/146765

(56) References cited:
- EP-A1- 2 549 452
- GB-A- 2 503 058
- GB-A- 2 518 013
- MX-A- 2010 008 125
- US-A1- 2004 194 980
- US-A1- 2005 179 561
- US-A1- 2008 084 306
- US-A1- 2011 140 850
- US-A1- 2014 118 143

## Description

The present invention relates to a communication system, in particular a system for fluid containing cylinders.

Although reference is made to a "cylinder", it will be understood that the invention is applicable broadly to all portable pressurised gas containers whether they are strictly in the form of a cylinder or not.

Such cylinders are used to supply gas for a range of applications including welding and cutting hoses and torches, gas packaging machines and laboratory equipment.

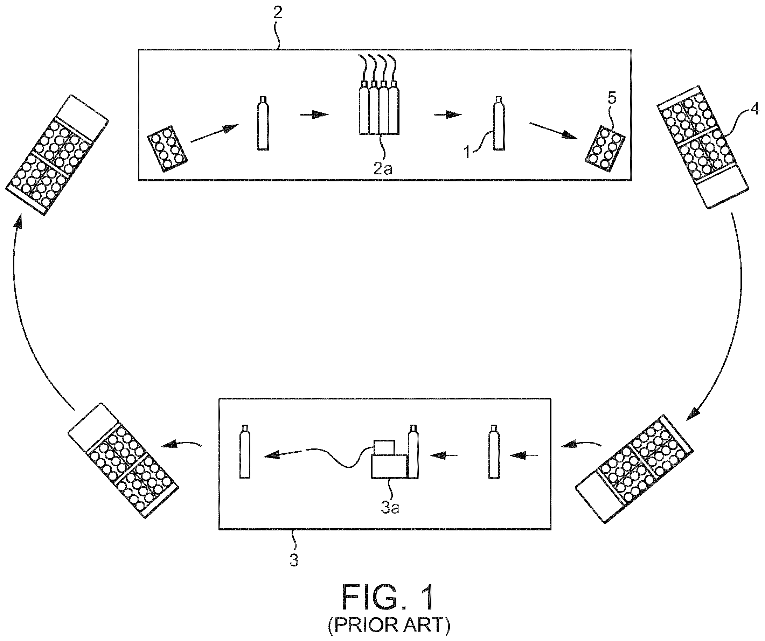

Figure 1 shows a prior art system for transporting fluid containing cylinders. As shown in the Figure, the system contains a fluid containing cylinder 1 which is transportable between a depot 2 in which the cylinder is filled up with fluid using a machine 2a, and an end-user location 3 in which the cylinder is used by a machine 3a.

The cylinder is typically transported between the depot 2 and the end-user location 3 via one or more vehicles 4. To stop the cylinder rolling around the vehicles during transportation, the cylinder is typically carried, with other cylinders, by a pallet 5.

Typically, each of the cylinders carries either a bar-code or an RFID tag. As each cylinder enters or exits either the depot 2 or the end-user location 3, the bar-code or RFID tag is read so that the location of the cylinder is then known. The reading process is manual because the location of the bar-code/tag on the cylinders are not in a fixed position as the cylinders are not always orientated in one direction as they are transported. The reader also often has to be within a close range, normally less than 0.5m.

Whilst in the case of RFID tags, the system could be automated by the use of portals through which the cylinders are channelled, RFID technology is not 100% effective when used on metallic components, such as gas cylinders, because of the mass of metal.

All these factors can lead to errors in logging cylinder locations, and also make the system very labour and time intensive.

US 2011/0140850 discloses a tracking system for gas cylinders which uses RFID technology to identify and track cylinders. Similarly, US 2008/0084306 discloses a cylinder tracking system which uses RFID technology to monitor the location of cylinders both within and between facilities.

GB 2 518 013 A is directed to a system for a scuba diver where the scuba tank communicates locally, using magnetic induction, with the scuba diver's diving commuter and long range, using acoustic waves, with the support boat.

According to the present invention, there is provided a module, a system, and a cylinder assembly as defined by the appended claims.

For a better understanding of the invention, and to show how the same may be put into effect, reference will now be made, by way of example only, to the accompanying Figures in which:
Figure 1 shows a prior art system for transporting fluid containing cylinders;
Figure 2 shows a system for transporting fluid containing cylinders according to the present invention;
Figure 3A shows a cylinder communicating with a communication module that can communicate with the cloud and also a control station;
Figure 3B shows a plurality of cylinders communicating with a communication module located on a pallet;
Figure 3C shows a plurality of the pallet from Figure 3B communicating with a communication module that is located on a transportation vehicle. Figure 3C also shows the communication module that is located on the transportation vehicle communicating with the cloud;
Figure 4 shows a flowchart of how a cylinder can send wireless signals in a power efficient manner; and

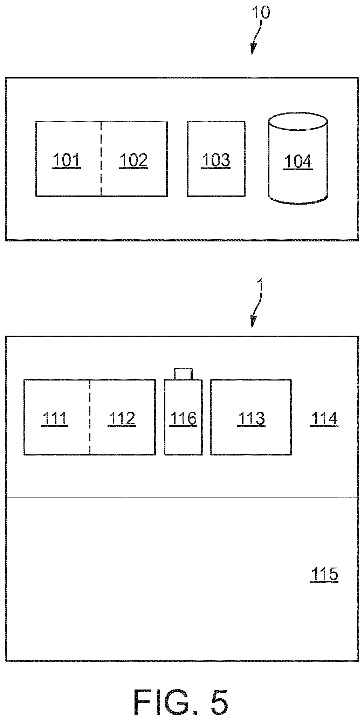

Figure 5 shows a schematic representation of a module and a cylinder assembly.

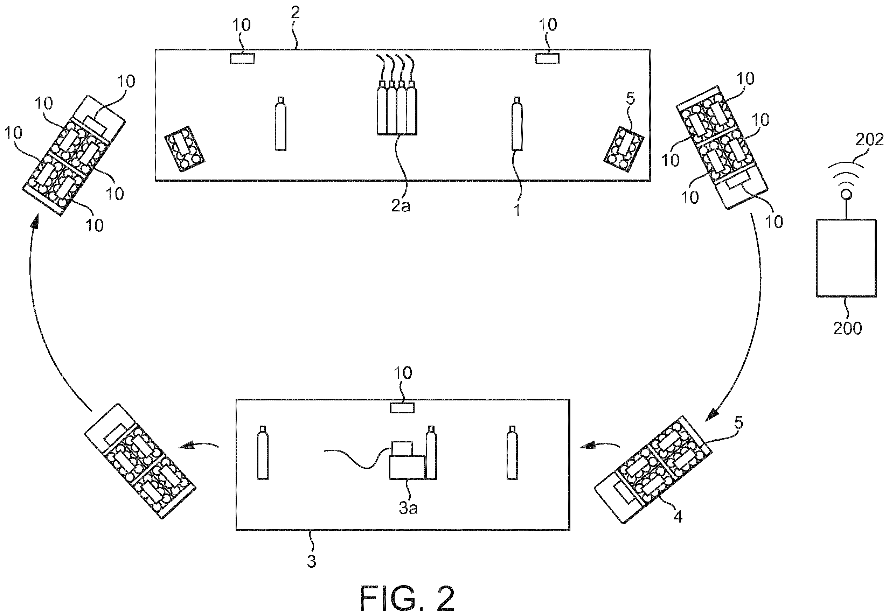

Figure 2 shows a first embodiment of a communication module 10 in accordance with the invention. The communication module 10 is arranged to communicate with one or more cylinder assemblies 1.

The communications module 10 may be powered by a generator, large store of charge (e.g. a capacitor or battery), or mains power connection. Cylinder assemblies 1 typically have only limited stored charge. Therefore, a communication module 10 proximate a cylinder assembly 1 may provide a means for the cylinder assembly 1 to communicate data to a remote station 200 further away than the communication module 10 at a lower cost to its own stored charge than if it communicated directly with the remote station 200.

The communication module 10 may comprise a memory 104 for storing the location of the communication module 10 and/or the identity of the communication module 10.

Each cylinder assembly 1 may contain a compressed fluid (a cylinder assembly includes a cylinder 115 and a valve 114 for controlling the flow of fluid to and from the cylinder).

The communication module 10 may comprise: first and second communication means 101, 102.

The first communication means 101 is arranged to wirelessly communicate with one or more cylinder assemblies 1 or one or more other communication modules 10

The second communication means 102 is arranged to wirelessly communicate with a remote station 200.

The range of the second communication means 102 is greater than the range of the first communication means 101.

The first and second communication means 101, 102 may be formed as separate communication components. For example, the first communication means 101 may comprise one or more of: a Bluetooth transmitter; a WiFi transmitter; an NFC transmitter; and/or an RFID transmitter. For example, the second communication means 102 may comprise one or more of: satellite communication means; a GSM transmitter; and/or a UHF transmitter.

Alternatively, the first and second communication means 101, 102 may be formed as a single component. When formed as a single component the first and second communication means 101, 102 may be a communications device having first and second operating modes. The communications device may be arranged to transmit at a greater power in the second operating mode than in the first operating mode.

The communication module 10 is arranged to use the first communication means 101 to receive data wirelessly transmitted from a cylinder assembly 1. For example, the communication module 10 may receive cylinder identity data and/or sensor data.

The communication module 10 is arranged to use the second communication means 102 to transmit data to a remote station 200. For example, the communication module 10 may use the second communication means 102 to re-transmit cylinder identity data and/or sensor data received via the first communication means 101. The communications module 10 may also use the second communication means 101 to transmit data from the memory 104 that identifies the communication module 10 or that indicates a location of the communication module 10.

Optionally the communication module 10 comprises a location determination unit 103 for determining the location of the module. For example, the location determination unit 103 may be a GPS device. In which case, the communication module 10 can use the second communication means 102 to transmit data to the remote station 200 to indicate its location. In some embodiments, the location determination unit 103 communicates with the first or second communication means 101, 102 to determine the location of the communication module 10 by triangulation. For example, the known locations of a plurality of remote communication devices and the relative strength of signals received therefrom can be used by the location determination unit 103 to establish the location of the communication module 10.

Such communication modules 10 may be employed in a variety of environments. For example, a plurality of communication modules 10 may be located in respective locations in which the cylinder assemblies 1 are likely to be stored, used, or filled, or may be located on transportation means such as vehicles (e.g., lorries, trailers, planes and/or ships).

In a preferred embodiment, the communication modules 10 may be distributed around a storage area.

Alternatively, or in addition, a communication module 10 may be attached to, or integrally formed with, a pallet 5. In such an embodiment, the communication module 10 additionally comprises a main body for supporting a plurality of cylinder assemblies 1. The main body can be the typical pallet structure known in the art.

For example, the main body may comprises a base on which the plurality of cylinders may be supported and a frame for individually supporting each cylinder in the spaced arrangement. In this way a plurality of cylinder assemblies can be held in a spaced arrangement with the same orientation (e.g. standing upright when the base is on flat ground).

In another embodiment, the main body of a communication module 10 may be part of a vehicle 4 or a trailer. Such a vehicle 4 or trailer may comprise a loading-carrying surface on which may be supported a plurality of cylinder assemblies 1 or, more preferably, one or more of the pallets 5 described above.

In this example, the pallet module 10 (the communication module 10 of the pallet 5) may comprise a store of charge, whereas the vehicle module (the communication module 10 of the vehicle 4) may be powered by a generator driven by the vehicle 4. In which case, it is preferable for the pallet module to transmit data to the remote station 200 via the vehicle module. The vehicle 4 may be an automobile such as a lorry, a trailer, an airplane and/or a ship.

A cylinder assembly 1 for use with the communication module 10 described above may simply comprise: a cylinder; a valve for controlling the flow of fluid from or to the cylinder; a store of charge; and means for transmitting data indicative of the identity of the cylinder assembly 1 (for example, each cylinder may be identified with a numerical code).

However, in preferred embodiments, the cylinder assembly 1 may be more sophisticated. In which case the communication module 10 may be used to transmit not just the location of the cylinder assembly 1, but also data obtained from sensors mounted thereon (either mounted on the valve 114 or on the cylinder 115).

Such a cylinder assembly 1 may comprise: a store of charge 116; at least one sensor 113; first communication means 111; and second communication means 112.

Such a cylinder assembly 1 may be configured to transmit sensor data to a remote station 200 via the communication module 10 when this is possible (for example, when it is within range), but may also have the capability to transmit sensor data to the remote station 200 directly, when the communication module 10 is not available (for example, when it is beyond the range of the first transmission means 111).

The at least one sensor is arranged to sense a property of the cylinder assembly 1 or of a fluid stored in the cylinder assembly 1 and thereby generate sensor data for transmission.

The at least one sensor 113 may comprise one or more of: a location sensor; a GPS location sensor; a location determination unit; a pressure sensor; a temperature sensor; a shock sensor; a tilt sensor; a vibration sensor; a liquid level sensor; and/or a mass flow sensor.

The first communication means 111 is arranged to wirelessly transmit identity data identifying the cylinder assembly 1 and/or sensor data to a communication module 10.

The second communication means 112 is arranged to wirelessly transmit identity data and/or sensor data to a remote station 200. The sensor data could indicate the location of the cylinder if a location sensor or a location determination unit is provided. As described above, a location determination unit may communicate with the first or second communication means 111, 112 to determine the location of the cylinder assembly 1 by triangulation. For example, the known locations of a plurality of remote communication devices and the relative strength of signals received therefrom can be used by the location determination unit to establish the location of the cylinder assembly 1.

The range of the second communication means 112 is greater than the range of the first communication means 111. The use of the second communication means 112 is therefore associated with a greater depletion of the charge stored on the store of charge 116 than the first communication means 111.

The first and second communication means 111, 112 are preferably formed as separate communication components. The first communication means 111 may comprise one or more of: a Bluetooth transmitter; a WiFi transmitter; an NFC transmitter; and/or an RFID transmitter. The second communication means 112 may comprise one or more of: a satellite transmitter; a GSM transmitter; and/or a UHF transmitter.

Alternatively, the first and second communication means 111, 112 are formed as a single component having first and second operating modes and the single component transmits at a greater power in the second operating mode than in the first operating mode.

The cylinder assembly 1 may be arranged to periodically use the first communication means 111 to transmit identity data and/or sensor data. Preferably, the first communication means 111 transmits identity data and/or sensor data with a period in the range 2 minutes to 60 minutes. More preferably, the first communication means 111 transmits identity data and/or sensor data with a period in the range 2 minutes to 30 minutes

The communication module 10 will indicate that the transmitted identity data and/or sensor data has been received by transmitting an acknowledgement to the cylinder assembly 1. The communication module 10 may then re-transmit the identity data and/or sensor data to the remote station 200. The first communication means 111 of the cylinder assembly 1 is arranged to receive the acknowledgement to thereby establish that the transmitted identity data and/or sensor data has been received.

In this way, the cylinder assembly 1 may determine whether the identity data and/or sensor data has been received by the remote station 200 via the communication module 10.

In an alternative embodiment, the communication module 10 may periodically emit a short transmission, which if received by the cylinder assembly 1 would indicate that any sensor data transmitted recently will have been received by the communication module 10.

In the absence of the receipt of an acknowledgement from the communication module 10 (or the receipt of a short transmission), the cylinder assembly 1 determines that the sensor data has not been received by the communication module 10.

In some embodiments, the cylinder assembly 1 may then transmit sensor data using the second communication means 112.

However, it is preferable when a communication module 10 is not available that the cylinder assembly 1 transmits identity data and/or sensor data using the second communication means 112 less frequently than when the communication module 10 is available. This is because the use of the second communication means 112 comes at a greater cost in terms of the use of stored charge 116.

Therefore, it is preferable that the cylinder assembly 1 is arranged to transmit identity data and/or sensor data using the second communication means 112 only if an acknowledgement has not been received within a predetermined period of time. For example, such a predetermined period of time may be in the range 30 minutes to 1 week. Preferably, the predetermined period of time may be in the range 60 minutes to 1 day.

That is, the cylinder assembly 1 will not transmit identity data and/or sensor data using the second communication means 112 if it has been possible to successfully transmit using the first communication means 111 within the preceding predetermined period of time.

A system in accordance with the invention may comprise a plurality of cylinder assemblies 1 and a plurality of communication modules 10.

In operation of the system, each of the cylinder assemblies 1 transmits identity data representing its identity which is picked up by the one or more communication modules 10 in proximity to the cylinder assembly 1. For each cylinder assembly 1, the location of the cylinder assembly 1 may be estimated as the location of whichever of the communication modules 10 the cylinder assembly 1 is nearest.

Each communication module 10 may be arranged to measure the strength of a signal received from a cylinder assembly 1 and may be arranged to use to transmit data representing the signal strength to one or more other communication modules 10. In this way, the system can compare signal strengths and thereby identify the communication module 10 nearest the cylinder assembly 1. Each communication module 10 of the system can therefore transmit to the remote station 200 data representing its own identity and the identity of one or more cylinder assemblies 1 for which the signal strength associated with that cylinder assembly 1 is the greatest.

The remote station 200 may store the location of a set of communication modules 10, so that the location of each cylinder assembly 1 may be estimated based on the location of the communication module 10 that sends that identity.

For example, the remote station 200 may store a look-up table associating the identity of a communication module 10 with a location. When identity data is received from a communication module 10, the remote station 200 can look up the location of that communication module 10 based on the identity data identifying the communication module 10 and estimate the locations of the cylinder assemblies 1 identified by the transmitted identity data based on that location.

Alternatively, each communication module 10 may comprise a location determination unit, such as a GPS device (or triangulation device using a communication means described above), so that the location of each cylinder assembly 1 may be transmitted with the identity data.

In some embodiments, each communication module 10 may transmit the measured signal strengths to the remote station 200 in addition to the data representing its own identity and the identity of the cylinder assemblies 1 from which it has received identity data. The remote station 200, can receive data from multiple control modules 10, establish the locations of each communication module 10, and estimate the location of each cylinder assembly 1 based on the signal strengths provided by each control module 10.

The following describes an exemplary scenario in which the invention is employed to track cylinder assemblies 1.

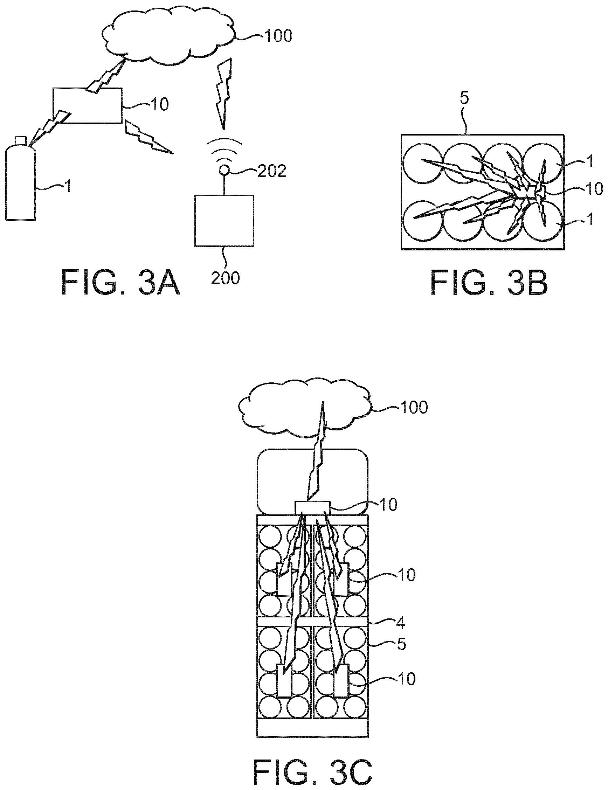

With reference to Figures 2 and 3A to 3C, there is shown a system for monitoring cylinder assemblies according to the invention.

The system comprises a plurality of spaced apart communication modules 10. Each communication module 10 may be as described above.

Preferably, the system contains a plurality of cylinder assemblies 1 for storing compressed fluids.

Each cylinder assembly 1 is transportable via one or more automotive vehicles 4 between a first location 2, such as a first building in which the cylinder is filled up with fluid using a machine 2a, and a second location 3 such as a second building in which the cylinder is used by a machine 3a.

To assist with the delivery of multiple cylinders 1 between the two locations 2, 3, each cylinder assembly 1 is transported along with other cylinders on a pallet 5 as shown in Figure 3B. Figure 3C shows a plurality of these pallets 5 loaded on a vehicle 4, which in this example is an automobile (or a trailer pulled thereby).

Each of the cylinder assemblies 1 comprises a wireless signal transmitter and a power source for powering the wireless signal transmitter. The wireless signal transmitter is arranged to transmit information relating to the cylinder assembly 1 or the fluid stored therein.

The locations 2, 3, each pallet 5, and each of the vehicles 4 comprises a communication module 10 having a wireless signal receiver/transmitter for receiving the information sent from the wireless signal transmitter of each cylinder assembly 1.

A remote station 200 that comprises a wireless signal receiver/transmitter 202 receives information from each of the communication modules 10. The remote station 200 may be located at one of the communication modules 10, or may be located in a location remote from the modules 10 as shown in Figure 2. Information sent to the control station from each of the communication modules 10 may be sent either directly, or via the cloud 100 (as shown in Figure 3A).

Information may also be sent/relayed between communication modules 10, as shown in Figure 3C which shows the information from the communication modules 10 of pallets 5 loaded on a vehicle 4 being relayed to the communication module on the vehicle 4. The relayed information may then be sent by the communication module 10 from the vehicle 4 to the cloud 100 (as shown in Figure 3C) for forwarding to the remote station 200, or sent to the remote station 200 directly.

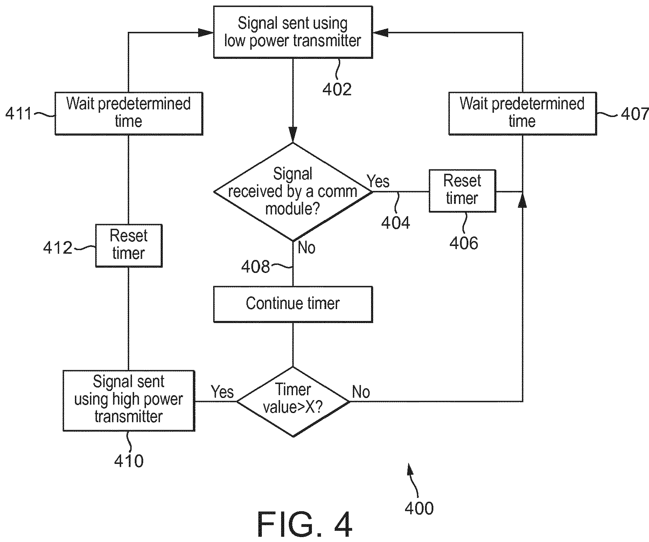

The flowchart of Figure 4 provides an example of the operation of the system of the invention.

A signal 402 is emitted by the low power wireless signal transmitter.

If a communication module 10 receives this low power wireless signal, then the module 10 sends back a signal to the cylinder assembly 1 confirming receipt of the low power signal 404. The signal sent from the communication module 10 is picked up by a wireless signal receiver located on the cylinder assembly 1. A subsequent low power wireless signal is then transmitted after a predetermined period of time 407 by the cylinder assembly 1. The period of time between any two emitted low power signals (i.e. the periodicity between these two signals) may be varied as needed.

If no response 408 is detected from a communication module 10 by the cylinder assembly 1 in response to an emitted low power signal, another low power signal is emitted by the cylinder assembly 1 after the predetermined period of time 407.

If after a predetermined interval of time, no response is detected from a communication module 10 by the cylinder assembly 1 then a more powerful wireless signal is transmitted 410 by the cylinder 1, using the high power wireless signal transmitter, which is picked up by the remote station 200 directly.

Following the transmission of the high power signal, the timer relating to the predetermined interval of time is reset 412. A low power wireless signal 402 is then transmitted after the predetermined period of time 411.

This instance of operation is particularly effective at maximising the longevity of the power source, since higher power wireless signals are sent only if consecutive low power wireless signals are not being picked up by any of the communication modules 10.

The interval of time can be changed to set the threshold at which a high power wireless signal is sent. In situations where knowing the location of a cylinder assembly 1 is important, the size of the interval can be decreased. In situations where minimising power expenditure from the power source is important, the interval size can be increased.

Rather than transmitting a high power signal after a predetermined interval of time, a high power signal could alternatively be sent after a predetermined number of consecutive emitted low power signals have not been successfully transmitted to any of the communication modules 10.

In a related instance of operation, rather than the cylinder assembly 1 emitting a series of low power signals, each of the communication modules 10 may each emit the series of a series of low power signals. In this instance, the cylinder assembly 1 would emit a low power signal to one of the communication modules only in response to it receiving a signal from one of the communication modules 10.

In this instance if, after the interval of time has elapsed, the cylinder assembly 1 has not emitted a signal to at least one of the communication modules 10, the cylinder assembly 1 may transmit a more powerful wireless signal using the high power wireless signal transmitter which is picked up by the remote station 200 directly.

It will be appreciated that various other modifications or adaptations could be made to the systems described above without departing from the scope of the invention.

Rather than using automotive vehicles 4 to transport the cylinders, these vehicles could be replaced and/or supplemented with other forms of transport, which each have a communication module 10, for instance a train, a bike, a plane, or a boat.

## Claims

1. A cylinder assembly (1), comprising:
at least one sensor (113) for sensing a property of the cylinder assembly (1) or a fluid stored in the cylinder assembly (1) and thereby generating sensor data;
first communication means (111) for wirelessly transmitting sensor data; and
second communication means (112) for wirelessly transmitting sensor data, wherein the range of the second communication means (112) is greater than the range of the first communication means (111),
**characterised in that**:
the first communication means (111) is arranged to receive an acknowledgement indicating that transmitted sensor data has been received; and
the cylinder assembly (1) is arranged to transmit sensor data using the second communication means (112) only if an acknowledgement has not been received within a predetermined period of time.

2. The cylinder assembly (1) of claim 1, wherein the first (111) and second (112) communication means are formed as separate communication components.

3. The cylinder assembly (1) of claim 1, wherein the first and second communication means (111, 112) are formed as a single component having first and second operating modes and the single component transmits at a greater power in the second operating mode than in the first operating mode.

4. The cylinder assembly (1) of claim 1, wherein the first communication means (111) periodically transmits sensor data.

5. The cylinder assembly (1) of claim 4, wherein the first communication means (111) transmits sensor data after a first period has elapsed, wherein the first period is in the range 2 minutes to 60 minutes.

6. The cylinder assembly (1) of any preceding claim, wherein the cylinder assembly (1) is arranged to periodically check whether an acknowledgement has been received within a predetermined period of time and transmits sensor data using the second communication means if an acknowledgement has not been received within the predetermined period of time.

7. The cylinder assembly (1) of any preceding claim, wherein the period between each transmission of sensor data by the first communication means is less than the predetermined period of time.

8. A cylinder assembly (1), comprising:
at least one sensor (113) for sensing a property of the cylinder assembly (1) or a fluid stored in the cylinder assembly (1) and thereby generating sensor data; and
a communication means (111, 112),
wherein the communication means (111, 112) has first and second operating modes, wherein the communication means transmits at a greater power in the second operating mode than in the first operating mode, the first operating mode for wirelessly transmitting sensor data to another cylinder assembly (1) or a communications module (10), and the second operating mode for wirelessly transmitting sensor data to a remote station (200)
**characterised in that**:
the communication means (111, 112) is arranged to receive an acknowledgement indicating that transmitted sensor data in the first operating mode has been received; and
the cylinder assembly (1) is arranged to transmit sensor data using the second operating mode only if an acknowledgement has not been received within a predetermined period of time.

## Patentansprüche

1. Zylinderanordnung (1), umfassend:
mindestens einen Sensor (113) zum Erfassen einer Eigenschaft der Zylinderanordnung (1) oder eines in der Zylinderanordnung (1) gespeicherten Fluids und dadurch zum Erzeugen von Sensordaten;
ein erstes Kommunikationsmittel (111) zum drahtlosen Übertragen von Sensordaten; und
ein zweites Kommunikationsmittel (112) zum drahtlosen Übertragen von Sensordaten, wobei die Reichweite des zweiten Kommunikationsmittels (112) größer ist als die Reichweite des ersten Kommunikationsmittels (111),
**dadurch gekennzeichnet, dass:**
das erste Kommunikationsmittel (111) angeordnet ist, um eine Bestätigung zu empfangen, die angibt, dass übertragene Sensordaten empfangen wurden; und
die Zylinderanordnung (1) angeordnet ist, um Sensordaten unter Verwendung des zweiten Kommunikationsmittels (112) nur dann zu übertragen, wenn innerhalb eines vorgegebenen Zeitraums keine Bestätigung empfangen wurde.

2. Zylinderanordnung (1) nach Anspruch 1, wobei das erste (111) und das zweite (112) Kommunikationsmittel als separate Kommunikationskomponenten ausgebildet sind.

3. Zylinderanordnung (1) nach Anspruch 1, wobei das erste und das zweite Kommunikationsmittel (111, 112) als eine einzelne Komponente ausgebildet sind, die einen ersten und einen zweiten Betriebsmodus aufweist, und die einzelne Komponente in dem zweiten Betriebsmodus mit einer höheren Leistung überträgt als in dem ersten Betriebsmodus.

4. Zylinderanordnung (1) nach Anspruch 1, wobei das erste Kommunikationsmittel (111) periodisch Sensordaten überträgt.

5. Zylinderanordnung (1) nach Anspruch 4, wobei das erste Kommunikationsmittel (111) Sensordaten überträgt, nachdem ein erster Zeitraum verstrichen ist, wobei der erste Zeitraum im Bereich von 2 Minuten bis 60 Minuten liegt.

6. Zylinderanordnung (1) nach einem der vorstehenden Ansprüche, wobei die Zylinderanordnung (1) angeordnet ist, um periodisch zu prüfen, ob eine Bestätigung innerhalb eines vorgegebenen Zeitraums empfangen wurde, und Sensordaten unter Verwendung des zweiten Kommunikationsmittels überträgt, wenn innerhalb eines vorgegebenen Zeitraums keine Bestätigung empfangen wurde.

7. Zylinderanordnung (1) nach einem der vorstehenden Ansprüche, wobei der Zeitraum zwischen jeder Übertragung von Sensordaten durch das erste Kommunikationsmittel kleiner als der vorgegebene Zeitraum ist.

8. Zylinderanordnung (1), umfassend:
mindestens einen Sensor (113) zum Erfassen einer Eigenschaft der Zylinderanordnung (1) oder eines in der Zylinderanordnung (1) gespeicherten Fluids und dadurch zum Erzeugen von Sensordaten; und
ein Kommunikationsmittel (111, 112),
wobei das Kommunikationsmittel (111, 112) einen ersten und einen zweiten Betriebsmodus aufweist, wobei das Kommunikationsmittel in dem zweiten Betriebsmodus mit einer höheren Leistung als in dem ersten Betriebsmodus überträgt, wobei der erste Betriebsmodus zum drahtlosen Übertragen von Sensordaten an eine andere Zylinderanordnung (1) oder ein Kommunikationsmodul (10) und der zweite Betriebsmodus zum drahtlosen Übertragen von Sensordaten an eine entfernte Station (200) dient,
**dadurch gekennzeichnet, dass:**
das Kommunikationsmittel (111, 112) angeordnet ist, um eine Bestätigung zu empfangen, die angibt, dass übertragene Sensordaten in dem ersten Betriebsmodus empfangen wurden; und
die Zylinderanordnung (1) angeordnet ist, um Sensordaten unter Verwendung des zweiten Betriebsmodus nur dann zu übertragen, wenn innerhalb eines vorgegebenen Zeitraums keine Bestätigung empfangen wurde.

## Revendications

1. Ensemble cylindre (1), comprenant :
au moins un détecteur (113) pour détecter une propriété de l'ensemble cylindre (1) ou d'un fluide stocké dans l'ensemble cylindre (1) et générer de ce fait des données de détecteur ;
un premier moyen de communication (111) pour transmettre sans fil des données de détecteur ; et
un deuxième moyen de communication (112) pour transmettre sans fil des données de détecteur, dans lequel la portée du deuxième moyen de communication (112) est plus grande que la portée du premier moyen de communication (111),
**caractérisé en ce que :**
le premier moyen de communication (111) est agencé pour recevoir un accusé de réception indiquant que les données de détecteur transmises ont été reçues ; et
l'ensemble cylindre (1) est agencé pour transmettre des données de détecteur en utilisant le deuxième moyen de communication (112) uniquement si un accusé de réception n'a pas été reçu dans une période de temps prédéterminée.

2. Ensemble cylindre (1) selon la revendication 1, dans lequel les premier (111) et deuxième (112) moyens de communication sont formés en tant que composants de communication indépendants.

3. Ensemble cylindre (1) selon la revendication 1, dans lequel les premier et deuxième moyens de communication (111, 112) sont formés en tant que composant unique ayant des premier et deuxième modes de fonctionnement et le composant unique transmet à une plus grande puissance dans le deuxième mode de fonctionnement que dans le premier mode de fonctionnement.

4. Ensemble cylindre (1) selon la revendication 1, dans lequel le premier moyen de communication (111) transmet périodiquement des données de détecteur.

5. Ensemble cylindre (1) selon la revendication 4, dans lequel le premier moyen de communication (111) transmet des données de détecteur après qu'une première période s'est écoulée, dans lequel la première période est dans la plage de 2 minutes à 60 minutes.

6. Ensemble cylindre (1) selon une quelconque revendication précédente, dans lequel l'ensemble cylindre (1) est agencé pour vérifier périodiquement si un accusé de réception a été reçu dans une période de temps prédéterminée et transmet des données de détecteur en utilisant le deuxième moyen de communication si un accusé de réception n'a pas été reçu dans la période de temps prédéterminée.

7. Ensemble cylindre (1) selon une quelconque revendication précédente, dans lequel la période entre chaque transmission de données de détecteur par le premier moyen de communication est inférieure à la période de temps prédéterminée.

8. Ensemble cylindre (1), comprenant :
au moins un détecteur (113) pour détecter une propriété de l'ensemble cylindre (1) ou d'un fluide stocké dans l'ensemble cylindre (1) et générer de ce fait des données de détecteur ; et
un moyen de communication (111, 112), dans lequel le moyen de communication (111, 112) a des premier et deuxième modes de fonctionnement, dans lequel le moyen de communication transmet à une plus grande puissance dans le deuxième mode de fonctionnement que dans le premier mode de fonctionnement, le premier mode de fonctionnement permettant de transmettre sans fil des données de détecteur à un autre ensemble cylindre (1) ou à un module de communications (10) et le deuxième mode de fonctionnement permettant de transmettre sans fil des données de détecteur à un poste distant (200)
**caractérisé en ce que :**
le moyen de communication (111, 112) est agencé pour recevoir un accusé de réception indiquant que des données de détecteur transmises dans le premier mode de fonctionnement ont été reçues ; et
l'ensemble cylindre (1) est agencé pour transmettre des données de détecteur en utilisant le deuxième mode de fonctionnement uniquement si un accusé de réception n'a pas été reçu dans une période de temps prédéterminée.
